# EUROPEAN PATENT SPECIFICATION

(11) **EP 1 201 788 B1**
(45) Date of publication and mention of the grant of the patent: **16.08.2006**
(21) Application number: 00935514.0
(22) Date of filing: 01.06.2000
(51) Int. Cl.: C23C 22/00, C23C 22/34, C23C 22/40, C23C 22/44, C23C 22/73, C23C 22/83, F28F 13/18, F28F 19/00, F28F 19/02, F28F 19/04, F28F 19/06

(54) **HEAT EXCHANGER MADE OF ALUMINUM ALLOY**
WÄRMETAUSCHER AUS ALUMINIUMLEGIERUNG
ECHANGEUR THERMIQUE EN ALLIAGE D'ALUMINIUM

(30) Priority: 04.06.1999 JP 15783399
(43) Date of publication of application: 02.05.2002
(73) Proprietor: Calsonic Kansei Corp., Tokyo 164-0014 (JP); NIHON PARKERIZING CO., LTD., Chuo-ku, Tokyo 103-0027 (JP)
(72) Inventor: UEHARA, Toshiyuki, Calsonic Kansei Corp., Tokyo 164-0014 (JP); YOSIDA, Chizuko, Calsonic Kansei Corp., Tokyo 164-0014 (JP); YAMAZAKI, Etsuko, Calsonic Kansei Corp., Tokyo 164-0014 (JP); NAKADA, Kazuya, Nihon Parkerizing Co., Ltd., Tokyo 103-0027 (JP)
(74) Representative: Sajda, Wolf E.
(86) International application number: PCT/JP2000/003529
(87) International publication number: WO 2000/075397

(56) References cited:
- EP-A- 0 676 250
- EP-A1- 0 015 020
- JP-A- 1 208 477
- JP-A- 1 306 575
- JP-A- 9 178 392
- US-A- 4 264 378

## Description

### FIELD OF THE INVENTION

This invention relates to an aluminum alloy thermal exchanger, especially in use for car air-conditioner. It further relates to an aluminum alloy thermal exchanger with film not containing chromium and having excellent corrosion resistance and hydrophile property on the surface of the aluminum alloy.

### BACK GROUND ART

Up to now, many of thermal exchangers fabricated with aluminum alloy are designed to place fin closely together in order to enlarge radiation and cooling area. However it tends to yield a lot of waterdrops made from moisture in air at narrow fin space because of hydrophobic property of the aluminum alloy which results decrease of the thermal exchanging efficiency and shows splash in ventilation downstream. In order to prevent such problem, therefore, several countermeasures are proposed to remove water drops from the narrow fin space by giving a hydrophilic property to the surface of the aluminum alloy.

As for the method to give hydrophilicity to the surface of aluminum alloy, there have been two ways ; one is to use a mixed film of organic compound and a alkaline silicate, and another is to use a organic high molecular film. However, both ways are still unsatisfied in order preventing another requirement of corrosion resistance property. A chemical conversion coating using chromic acid is generally carried out on the aluminum alloy in order to improve the corrosion resistance property. However, it includes hexavalent chromium being harmful to human body. Therefore, it is eagerly desired any innovative treatment solution not containing chromium.

JP63-171684A has disclosed a process to form an anti-corrosive and hydrophilic film on the surface of aluminum alloy by using a synthetic resin of specific monomer. It is, however, unsatisfactory about its hydrophilicity.

JP6-116527A has disclosed a process to give a hydrophilicity on aluminum material surface. However, this method is insufficient to eliminate odor due to its inorganic component.

Further, JP1-270977A has disclosed a method to make aluminum alloy of hydrophilic and corrosion resistance. However, it is not desirable to use a film of this method since it contains chromium compound.

Thus, there is still nothing developed for aluminumalloy thermal exchanger with film being excellent in both corrosion resistance and in hydrophilicity and not containing chromium compound.

### DISCLOSURE OF THE INVENTION

This invention is provided for resolution of problems against the existing techniques as above mentioned. Namely, it is the purpose of this invention to provide a new aluminum alloy thermal exchanger which has excellent corrosion resistance and hydrophilicity, resolving the problems such as reduction of thermal exchanging efficiency and splash from the condensed water drops, odor exhalation, and of course resolving the problem of harmful chromium.

As the result of various considerations to resolve the above problems, the present inventors found the way of two steps coating on aluminum alloy; the first step is a chemical conversion coating of specific vanadium compound with inorganic zirconium compound, and the second step is an organic-inorganic composite film comprizing specific polyvinyl-alcohol polymer, specific polyoxyethylene glycol, and a mixture of vanadium compound and zirconium compound.

The present invention is the aluminum alloy thermal exchanger being characterized in that the aluminum alloy has the first protective layer of chemical conversion coating being produced by using the treatment liquid containing (a) and (b) explained below on the surface of the aluminum alloy, and it further has the second protective layer of hydrophilic film being produced by adding the treatment liquid containing (c), (d), (e), (f) below, and the weight of zirconium in (f) is 40~350 % to the weight of vanadium in (e), and then drying.
(a) water soluble vanadium compound
(b) fluorozirconium complex compound
(c) aqueous polyvinyl alcohol polymer having vinyl alcohol unit of more than 40 mol % and additional polymerization unit (other than the vinyl alcohol unit of above) of less than 60 mol %
(d) polyoxyethylene glycol of 6,000~1,000,000 in average molecular weight
(e) vanadium compound
(f) zirconium compound

Details of this invention are described. The Aluminum alloy thermal exchanger of this invention has the first protective layer of a chemical conversion film and the second protective layer of a hydrophilic film on the surface of the aluminum-alloy.

The first protective layer is built up on the surface of said aluminumalloy, through chemical conversion treatment using a treatment liquid containing (a) watersoluble vanadium compound and (b) fluorozirconium complex compound.

As for watersoluble vanadium compound (a), it is preferable to apply organic vanadium complex compound being selected from the inorganic vanadium compounds such as metavanadic acid and vanadic acid and their salt of either sodium, potassium, or ammonium, vanadium sulfate, vanadyl sulfate, vanadium nitrate, and vanadium acetate, and also from the organic vanadium complex compounds such as vanadium acetylacetonate, and vanadyl acetylacetonate. For the above mentioned water soluble vanadium compou nd (a), it is more desirable the organic vanadium complex compound.
For fluorozirconium complex compound (b), it is applicable either zirconium hydrofluoride, zirconium-ammonium fluoride, and zirconium-potassium fluoride.

There is no limitation on blending ratio of (a) and (b) compounds into the treatment liquid.

The first protective layer is, as above mentioned, complex chemical conversion film, containing vanadium and zirconium. Fluorozirconium complex compound may be considered to precipitate and to form a framework of oxide or fluoride on the surface of the aluminum alloy, and the frame work may insulate the surface from corrosive matter. Thus white rust resistance is given by zirconium, while the vanadium gives to the aluminum alloy a resistance against pitting corrosion. As result of these composite effects, it is deemed that the first protective layer contributes to an excellent corrosion resistance without chromium.

In this invention, for the first protective layer, the film weight is preferable at 10~2000 mg/m², and more preferable at 50 ~ 500 mg/m². In case less than 10 mg/m², it becomes insufficient on adhesion with the second protective layer and becomes less corrosion resistant, while in case more than 2000 mg/m² it result not only to saturate the effect but also to lead the cost expensive. Further when the film weight exceeds 2000 mg/m², it becomes less uniform in film appearance and it arises a bad odor from the second protective layer, so it is better to control the film weight being not more than 2000 mg/m².

The vanadium amount in the first protective layer may be preferable at 2~500 mg/m², and more preferable at 10~300 mg/m². When the amount is below 2 mg/m², pitting corrosion resistance may become to decrease. The zirconium amount may be preferable at 2 ~ 500 mg/m², and more preferable at 10~300 mg/m². When the amount is below 2 mg/m², corrosion resistance against white rust may become to decrease. However, when each of them become over 500 mg/m², it may become costly and may arise a bad odor.

The first protective layer of aluminum/alloy thermal exchanger in this invention is covered by the second protective layer. This second protective layer is built up by using the treatment liquid containing (c),(d),(e) and (f) as explained below. (c) is aqueous polyvinyl alcohol polymer having vinyl-alcohol unit of more than 4 0 mol% and additional polymerization unit (other than the vinyl-alcohol unit of above) of less than 60 mol%. (d) is polyoxyethylene glycol of 6,000 ~ 1,000,000 in average molecular weight, (e) is vanadium compound and (f) is zirconium compound And the weight ratio of zirconium in the compound (f) to vanadium in the compound (e) is 40~350 %.

Formula (I) below shows example of polyvinyl alcohol polymer (c) explained above, and it may also be another denatured polymer obtainable as reaction product between the polyvinyl-alcohol polymer (I) and diketene.

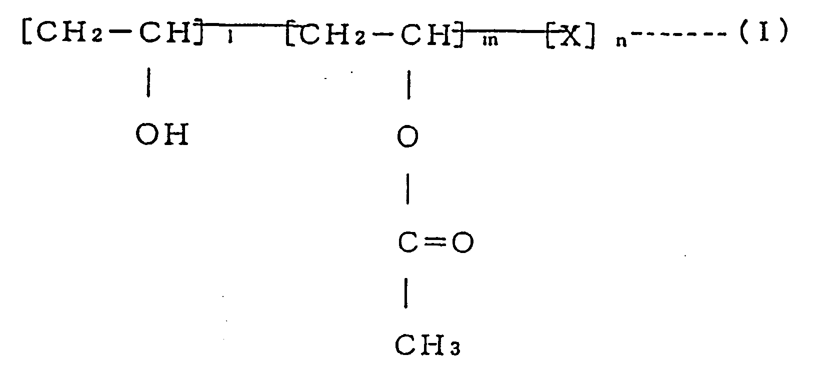

In polyvinyl-alcohol polymer shown in formula (I), it may include either partial or entire saponificated compounds of poly-vinyl acetate and any copolymers of polyvinyl acetate with other monomer, and there is no limitation to the kind of co-monomer to be copolymerized with vinyl acetate.
In polyvinyl-alcohol compound shown in formula (I), "X" indicates copolymer being different from vinyl-acetate and vinyl-alcohol and "1", "m", and "n" indicates molecular number of vinyl-alcohol unit, vinyl-acetate unit, and additional polymer unit other than vinyl-acetate, respectively. In formula (I), [{n / (1 +m +n)} x 100] is desirable to be below 40 mole %, and more desirable to be below 30 mole %. Also, in polyvinyl-alcohol polymer shown in formula (I), [{m / (1 +m +n)} x 100] is desirable to be below 20 mole %, and more desirable to be below 10 mole %. In case of excessive mole ratio of the above, it may reduce water-solubility of the polyvinyl-alcohol. Regarding a value of [{ 1 / (1 +m +n)} x 100], it may results as 40~100 mole % from both values of above.

Hydroxyl group in polyvinyl-alcohol polymer (c) may give to the second protective layer a water-proof property after cross linking reaction with additional copolymer unit and zirconium. And hydroxyl group being not participated such reaction give hydrophile properties to the second protective layer.

For polyoxyethylene glycol (d) of the second protective layer, the average molecular weight is desirable between 6,000~1,000,00 0. The above polyoxyethylene glycol (d) becomes immobilized in the second protective layer by formation of polymeric complex compound with zirconium ion in the zirconium compound (f), and may show odor-preventing properties and hydrophile properties.
In case the average molecular weight of the polyoxyethylene glycol (d) is below 6,000, immobility in the second protective layer may decrease under wet condition, and a durable time of good odor-preventing properties and of good hydrophile properties may decrease. While in case the average molecular weight is over 1,000, 000, it becomes cost up for production of treatment liquid since it becomes difficult itself to dissolve into the water.
As for the vanadium compound (e) of the second protective layer in this invention, many sort of inorganic and organic vanadium compounds of any vanadium valence may be used, but it is more preferable to use tetravalent or pentavalent vanadium. Inorganic vanadium compounds such as metavanadic acid and vanadic acid and their salt of sodium, potassium, or ammonium, vanadium pentoxide, vanadium sulfate, vanadyl sulfate, vanadium nitrate, vanadyl nitrate, vanadium acetate and vanadium phosphate may be used. Also organic vanadium compounds such as vanadium acetylacetonate and vanadyl acetylacetonate may be used.

Vanadium in the second protective layer shows properties of resisting against pitting corrosion like the vanadium in the first protective layer. The effectiveness of vanadium is deemed with a self-remedy process, which is similar to chromate film. When a part of aluminum alloy may be corroded, vanadium may move from the film to the corroded portion and may form there a new strong film again and isolate the aluminum alloy from the corrosive matter. It is also deemed that it may produce some compounds in the second protective layer being difficult to dissolve in water, together with zirconium as mentioned later.

As for the zirconium compound (f) in the second protective layer in this invention, following agent such as zirconium-ammonium carbonate, zirconium-potassium carbonate, zirconyl nitrate, zirconyl sulfate, zirconyl acetate, zircon hydrofluoric acid and its salt may be used.

Zirconium in the second protective layer shows white-rust resistant effect similarly to the process of zirconium in the first protective layer by isolating the surface of aluminum alloy from external corrosive matter by formation of framework through cross-linking process between zirconium and hydroxyl group in polyvinyl-alcohol polymer (c).

Also, zirconium has a role of building up some water insoluble compound with vanadium, making vanadium difficult to dissolve. For weight ratio of zirconium to vanadium, it is preferable between 40~350 %. In case below 40 %, vanadium may decrease its durability time of corrosion resistance. While in case over 350 %, it demerits economically. When the content of polyvinyl alcohol polymer (c) is 100 weight ratio in the treatment solution for the second protective layer in this invention, it may be preferable that the polyoxyethylene glycol (d) may be at 1 0~1000 weight ratio, vanadium compound (e) may be at 1~200 weight ratio in vanadium-ion and zirconium compound (f) may be at 0.4~700 weight ratio in zirconium-ion.
Further, for the second protective layer in this invention, it may include other additives (g), such as anti-microbial agent and mildew-preventing agent, cross-linking agent such as aqueous epoxy resin and surface-active agent in the allowable amount of not impairing the primary effect.

Anti-microbial agent and mildew preventing agent which are to be added to prevent foul odor from bacteria's propagation. The decomposition temperature of the anti-microbial agent and mildew-preventing agent is desirable to be at 100°C, and more preferable to be at 150°C in order to keep its effect to the said temperature.

The contained weight of the anti-microbial agent and mildew preventing agent is desirable at 0.1~70 wt% to the total weight of (c)+(d) of the second protective layer, and more preferable at 0.3~50 wt % and further more preferable at 0.5~30 wt %. In case below 0.1 wt%, it becomes insufficient on effect, while exceeding 70 wt% it degrades waterproof property of the film.

In this invention, cross linking agent is added in order to make the second protective layer to be a three dimensional structure through reaction with hydroxyl group in polyvinyl alcohol aqueous polymer (c) or with terminal hydroxyl group in polyoxyethylene glycol (d). It is desirable to use aldehyde as the cross-linking agent such as polyglycidyl compound, blocking isocyanate, polymethylol compound and glyoxal. These addition of cross linking agent may increase more waterproof properties on the second protective layer.
The content of the cross-linking agent is desirable at 0.1~70 wt% to the total content of (c)+(d). In case below 0.1 % wt%, it becomes insufficient the cross-linking effect, while exceeding 70 wt %, it is not desirable for weakening of film adhesion.

Many sort of surfactant may be added in order to make smooth the surface of the second protective layer. The content is preferable to be at 0.1~70 wt% to the total content of (c)+(d),and more preferable at 0.3~50 wt %, and further more preferable at 0.5~30 wt%. In case below 0.1 % wt %, it is difficult to obtain a clear effect, while exceeding 70 wt % it degrades the water proof property of the film.

It is preferable that the film weight of the second protective layer in this invention may be at 30~5000 mg/m², and more preferable at 40 ~3500 mg/m², and further more preferable at 50~ 2500 mg/m². In case below 30 mg/m², corrosion resistance, hydrophile properties and odor-preventing properties become insufficient, while exceeding 5000 mg/m² may be wasteful.

It is preferable that the content of the vanadium compound in the second protective layer may be at 2~500 mg/m² being calculated in vanadium element, and more preferable to be at 2~250 mg/m² in vanadium element. Also zirconium compound may preferably be contained at 1~1750 mg/m² being calculated in zirconium element, and is more preferable to be 1~875 mg/m², wherein the weight ratio of zirconium to vanadium should be at 40~350 %.
In case when vanadium is below 2 mg/m² or zirconium is below 1 mg/m², the corrosion resistance may be decreased, however when vanadium exceeds 250 mg/m² or zirconium exceeds 1750 mg/m², it may be wasteful.

It is described the film formation method in this invention. First, the surface of the aluminum alloy thermal exchanger is chemically cleaned by using alkali cleaner or acid cleaner. Subsequently, the first protective layer is formed on the surface of the thermal exchanger through chemical conversion coating. And then it is coated with the treatment liquid containing (c) ~ (f) and other additives in order to form the second protective layer. Many coating method may be applied, however, it is generally used dipping method. After coating, it is preferable to dry it under a hot blast of 80~250°C and more preferably of 100~200°C.

### EMBODYMENT EXAMPLE AND COMPARATIVE EXAMPLE

Aluminum alloy thermal exchanger of embodiment examples 1~9 and comparative examples 1~9 were used as specimens. After cleaning the surface, the first protective layer and the second protective layer were farmed. And then tests were carried on the specimens. However, for anti-microbial test, Al-Mn alloy sheets (JIS-A3004) of 70mm×150mm× 1.2mm were used.

### (1) Surface cleaning

All specimens were cleaned by dipping into 3 wt% water solution of alkali degreasing agent ( Fine Cleaner 315^{(R)} ; Nihon Parkerising Co.Ltd.) maintained at 60°C and kept for 90 seconds in order to remove such as grease away from the surface, and rinsed with fresh water. Then, dipped into 10 wt% of 10 % sulfuric acid at room temperature for 90 seconds, and rinsed with fresh water.

### (2) Formation of the first protective layer of embodiment examples

The treatment solution used in formation of the first protective layer of the embodiment examples are shown in Table 1. And the treatment solutions used in formation of the first protective layer of the comparative examples are shown in Table 2. Followings are showing the agent used in (a) -①~(a) -③ and (b) -① ~ (b) -② of Table 1 and 2.
(a) Water soluble vanadium compound
   -① vanadyl-acethylacetonate [(C₆H₇O₂)₂VO]
   -② vanadium-acethylacetonate [(C₅H₇O₂)₃V]
   -③ meta-vanadic acid ammonium [(NH₄)VO₃]
(b) Fluoro zirconium complex compound
   -① zirconium hydrofluoride [H₂ZrF₆]
   -② zirconium-ammonium fluoride [(NH₄)₂ZrF₆] .

### (3) Formation of the first protective layer of comparative examples

Fluorzirconium complex compound (b) were not used in comparative example 1 and 3.
· Water soluble vanadium compound (a) was not used in comparative example 2.
· Zirconium phosphate is applied for the first protective layer instead of the present invention in comparative example 9.

### (4) Formation of the second protective layer

After the formation of the first protective film, the specimens were dipped into the treatment solution in order to form the second protective film. Then the specimens were dried for 30 minutes in 150 °C. The composition of the element in the second protective film are shown in Table 1 and Table 2. The following is the agent used in (c)-① ~ (c) -② , (d)-①~(d)-②, (e)-①~(e)-②, (f)-①~(f)-③ and (g) of Table 1 and Table 2.
(c) polyvinyl alcohol polymer
   -① saponificated polyvinyl alcohol (saponification degree: 90 mol%, molecular weight: 100 thousand)
   -② 5 mol% diketene treated polyvinyl alcohol (saponification degree: 90 mol%, molecular weight: 50 thousand)
(d) polyoxyethylene glycol
   -① polyethylene glycol 20000 (average molecular weight: 20 thousand)
   -② polyethylene oxide(average molecular weight: 300 thousand)
(e) vanadium compound
   -① sodium meta vanadate [NaVO₃]
   -② ammonium meta vanadate [NH₄V0₃]
(f) zirconium compound
   -① zirconium hydrofluoriide [H₂ZrF₆]
   -② zirconium-ammonium fluoride [(NH₄)₂ZrF₆]
   -③ zirconium ammonium carbonate [(NH₄)₂Zr(CO₃)₃]
(g) additives (anti-microbial agent)
   -① sodium-2-pyridine-thiol-1-oxide (cross-linking agent)
   -② glycerol diglycidyl ether (aqueous epoxy cross-linking resin, surface active agent)
   -③ polyoxyethylenealcohol ether (non-ionic surfactant, HLB=12)

### (5) Test and evaluation

The results of the test are explained in Table 1~Table 4.

### (Weight of film)

It was measured by using a fluorescent X-ray analyzer and a surface carbon analyzer.

### (corrosion resistance)

The salt spray test according to JID-Z-2371 were carried out for 24 hr, and observed the white rust occurrence at the fin of the thermal exchanger.
- ⊚: :no white rust
- ○:: white rust area below 10 %
- Δ :: white rust area 10~30 %
- × :: white rust area over 30 %

### (hydrophilic property)

After 72 hours dipping into flowing water at room temperature then 1 hour drying at 80°C, the contact angle of the fin portion of thermal exchanger with water was measured (using an image-processing contact angle meter Type CA-X; Kyowa Surface Chemistry Co.).

### (odor-preventing property)

After 72 hours dipping into flowing water at room temperature then 1 hour drying at 80°C, it was examined by smell.
- ○ :: no odor
- Δ :: a little odor
- × :: clear odor

### (anti-microbial property)

Test specimens were dipped for 72 hr into a flowing water at room temperature, then the specimens were dried for 1 hr at 80 °C. The specimens were cut into the size of 4 cm×4 cm, then nutrient and microbe were sprayed on the cut samples, and then they were cultivated for 14 days at 30 ± 2°C. The number of extracting microbe from the cultivated mat was measured.
- ○ :: the number of microbes < 10² /m²
- Δ:: 10² /m² ≦ the number of microbes<10⁶ /m²
- × :: the number of microbes ≧ 10⁶/m²

### Microbes used in test

Microbes : Escherichia coli, Bacillus subtilis, Pseudomona aeruginosa

Mildew : Aspergillus niger, Penicillium citrinum, Cladosporium cladosporides

As seen from Table 1 and 3, the embodiment examples 1 ~ 9 of aluminum alloy thermal exchanger having the first protective layer and the second protective layer of this invention showed excellent corrosion resistance as well as excellent hydrophilicity and odor preventive property.

Whereas in Table 2 and 4, comparative examples 1 ~ 3, which did not use vanadium compound (a) or fluoro-zirconium complex compound (b) for the first protective layer, they were inferior in corrosion resistance. In comparative example 4 which did not use aqueous polyvinyl-alcohol polymer (c), it was seen insufficient in corrosion resistance, hydrophilicity and odor preventive property. In comparative example 5 which did not use polyoxyethylene glycol (d), it was insufficient in hydrophilicity. Also, in comparative example 6 which did not use vanadium compound (e), it resulted inferior corrosion resistance. In comparative example 7 which did not use zirconium compound (f), it was inferior to corrosion resistance and to odor preventive property. It was also insufficient in corrosion resistance in comparative example 8 where the weight ratio of vanadium to zirconium is below 40 %. Further in comparative example 9 where zirconium phosphate is applied as the first protective layer instead of the present invention, corrosion resistance was unsatisfactory.

### ADVANTAGES OF THE INVENTION

According to the formation of the first protective layer and the second protective layer of this invention on the surface of alumin um alloy, it became possible to obtain aluminumalloy thermal exchanger of not containing any harmful chromium ion on its surface and having good corrosion resistance, good hydrophilicity, and excellent preventive capacity against odor for a long term.

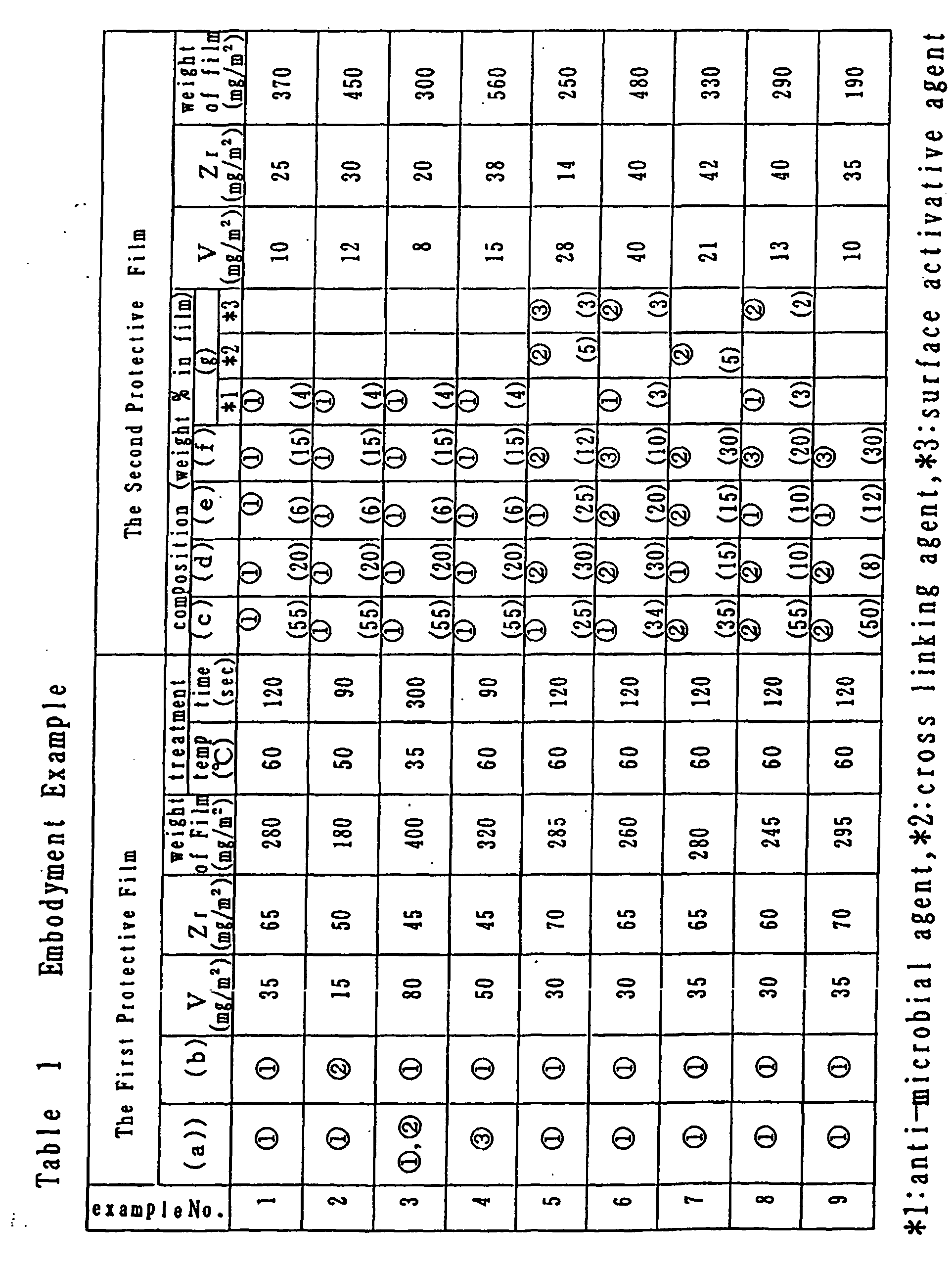

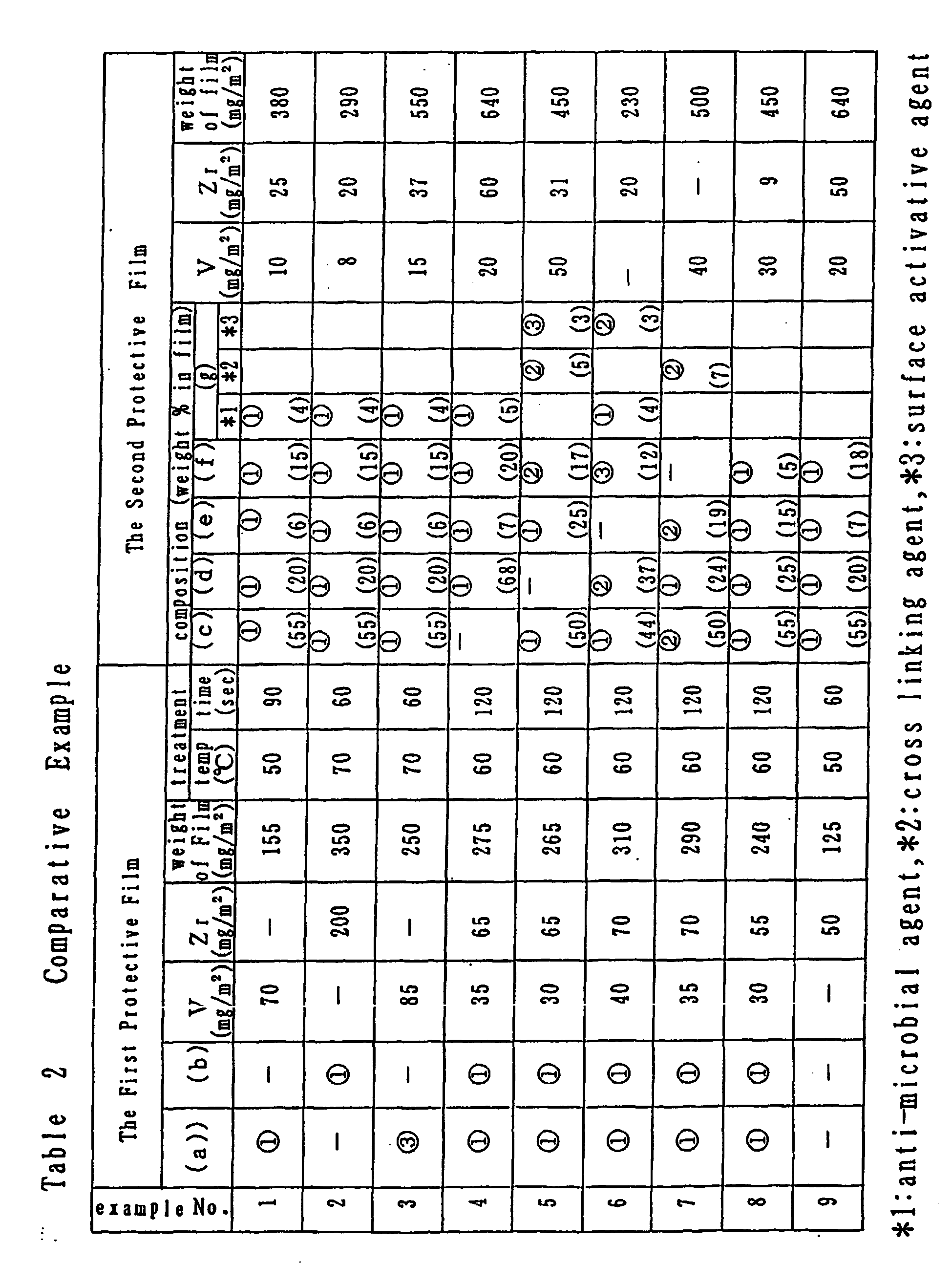

**Table 3 Embodytnent Example**

| example Number | corrosion resistance | hydrophilic property by contact angle (') with water | | odor-preventing property | anti-microbial property |
|---|---|---|---|---|---|
| | | before contacting with water flow | after 72hr contacting with water flow | | |
| 1 | ⊚ | <5 | 20~25 | ○ | ○ |
| 2 | ⊚ | <5 | 18~24 | ○ | ○ |
| 3 | ○ | <5 | 21~27 | ○ | ○ |
| 4 | ○ | <5 | 17~22 | ○ | ○ |
| 5 | ○ | <5 | 15~19 | ○ | × |
| 6 | ⊚ | <5 | 17~21 | ○ | ○ |
| 7 | ⊚ | <5 | 15~20 | ○ | × |
| 8 | ⊚ | <5 | 23~28 | ○ | ○ |
| 9 | ⊚ | <5 | 19~26 | ○ | × |

Table 4 Comparative Example

| example Number | corrosion resistance | hydrophilic property by contact angle (') with water | | odor-preventing property | anti-microbial property |
|---|---|---|---|---|---|
| | | before contacting with water flow | after 72hr contacting with water flow | | |
| 1 | Δ | <5 | 19~23 | ○ | ○ |
| 2 | Δ | <5 | 22~26 | ○ | ○ |
| 3 | × | <5 | 18~21 | ○ | ○ |
| 4 | × | <5 | 41~52 | × | Δ |
| 5 | ○ | 21~25 | 38~45 | ○ | × |
| 6 | Δ | <5 | 15~20 | ○ | ○ |
| 7 | × | <5 | 17~21 | Δ | × |
| 8 | Δ | <5 | 20~24 | ○ | × |
| 9 | × | <5 | 20~23 | Δ | × |

## Claims

1. An aluminum alloy thermal exchanger,
having a first protective layer of a chemical conversion coating produced by using a treatment liquid containing substances (a) and (b) on the surface of the aluminum alloy, and further having a second protective layer**, characterized in that** said second protective layer consists of a hydrophilic film produced by applying a treatment liquid containing substances (c), (d), (e) and (f) wherein the weight of zirconium in (f) is 40 to 350 % by weight of the vanadium in (e), on the first protective layer and subsequent drying, wherein
(a) = water soluble vanadium compound
(b) = fluorozirconium complex compound
(c) = aqueous polyvinyl alcohol polymer having a vinyl alcohol unit of more than 40 mol % and an additional polymerization unit (other than the vinyl alcohol unit indicated above) of less than 60 mol %
(d) = polyoxyethylene glycol with an average molecular weight of 6,000 to 1,000,000
(e) = vanadium compound
(f) = zirconium compound.

2. The aluminum alloy thermal exchanger
according to claim 1,
**characterized in that** the water soluble vanadium compound (a) is one or more than one of organic compounds selected from the group of vanadium acetyl acetonate and vanadyl acetyl acetonate.

3. The aluminum alloy thermal exchanger
according to claim 1,
**characterized in that** the weight of the first protective film is 10 to 2000 mg/m², the vanadium in the first protective film is 2 to 500 mg/m² and the zirconium in the first protective film is 2 to 500 mg/m².

4. The aluminum alloy thermal exchanger
according to claim 1,
**characterized in that** the weight of the second protective film is 30 to 5000 mg/m², the vanadium in the second protective film is 2 to 500 mg/m² and the zirconium in the second protective film is 1 to 1750 mg/m².

## Patentansprüche

1. Wärmeaustauscher aus einer Aluminiumlegierung, der folgendes aufweist:
eine erste Schutzschicht aus einer chemischen Passivierungsschicht, die unter Verwendung von einer die Substanzen (a) und (b) enthaltenden Behandlungsflüssigkeit auf der Oberfläche der Aluminiumlegierung erzeugt worden ist, und ferner
eine zweite Schutzschicht,
**dadurch gekennzeichnet,**
**daß** die zweite Schutzschicht aus einer hydrophilen Schicht besteht, die erzeugt wird, indem eine Behandlungsflüssigkeit, die die Substanzen (c), (d), (e) und (f) enthält, wobei das Gewicht von Zirconium in (f) 40 bis 350 Gew.-% des Vanadiums in (e) beträgt, auf die erste Schutzschicht aufgebracht und anschließend getrocknet wird, wobei
(a) = wasserlösliche Vanadiumverbindung,
(b) = Fluorzirconium-Komplexverbindung,
(c) = wäßriges Polyvinylalkoholpolymer, das mehr als 40 Mol-% einer Vinylalkohol-Einheit und weniger als 60 Mol-% einer weiteren Polymerisationseinheit (von der vorstehend angegebenen VinylalkoholEinheit verschieden) aufweist,
(d) = Polyoxyethylenglycol mit einem durchschnittlichen Molekulargewicht von 60 00 bis 1 000 000,
(e) = Vananiumverbindung, und
(f )= Zirconiumverbindung

2. Wärmeaustauscher aus einer Aluminiumlegierung nach Anspruch 1,
**dadurch gekennzeichnet,**
**daß** die wasserlösliche Vanadiumverbindung (a) eine oder mehr als eine organische Verbindung aus der Gruppe von Vanadiumacetylacetonat und Vanadylacetylacetonat ist.

3. Wärmeaustauscher aus einer Aluminiumlegierung nach Anspruch 1,
**dadurch gekennzeichnet,**
**daß** das Gewicht der ersten Schutzschicht 10 bis 2000 mg/m², das von Vanadium in der ersten Schutzschicht 2 bis 500 mg/m² und das von Zirconium in der ersten Schutzschicht 2 bis 500 mg/m² beträgt.

4. Wärmeaustauscher aus einer Aluminiumlegierung nach Anspruch 1,
**dadurch gekennzeichnet,**
**daß** das Gewicht der zweiten Schutzschicht 30 bis 5000 mg/m², das von Vanadium in der zweiten Schutzschicht 2 bis 500 mg/m² und das von Zirconium in der zweiten Schutzschicht 1 bis 1750 mg/m² beträgt.

## Revendications

1. Echangeur thermique en alliage d'aluminium,
ayant une première couche protectrice composée d'un revêtement de conversion chimique produit en utilisant un liquide de traitement contenant des substances (a) et (b) à la surface de l'alliage d'aluminium, et ayant en outre une seconde couche protectrice, **caractérisé en ce que** ladite seconde couche protectrice est constituée d'un film hydrophile produit en déposant un liquide de traitement contenant des substances (c), (d), (e) et (f), dans lequel le poids du zirconium dans (f) représente 40 à 350 % en poids du vanadium dans (e), sur la première couche protectrice, avant séchage, dans lequel
(a) = composé de vanadium soluble dans l'eau,
(b) = composé de complexe de fluorozirconium,
(c) = polymère d'alcool polyvinylique aqueux ayant un motif alcool vinylique représentant plus de 40 % molaires et un motif de polymérisation supplémentaire (autre que le motif alcool vinylique indiqué ci-dessus) représentant moins de 60 % molaires,
(d) = polyoxyéthylène glycol ayant une masse moléculaire moyenne de 6 000 à 1 000 000,
(e) = composé de vanadium, et
(f) = composé de zirconium.

2. Echangeur thermique en alliage d'aluminium selon la revendication 1, **caractérisé en ce que** le composé (a) de vanadium soluble dans l'eau est au moins un des composés organiques choisis dans le groupe de l'acétylacétonate de vanadium et de l'acétylacétonate de vanadyle.

3. Echangeur thermique en alliage d'aluminium selon la revendication 1, **caractérisé en ce que** le poids du premier film protecteur va de 10 à 2000 mg/m², celui du vanadium dans le premier film protecteur va de 2 à 500 mg/m² et celui du zirconium dans le premier film protecteur va de 2 à 500 mg/m².

4. Echangeur thermique en alliage d'aluminium selon la revendication 1, **caractérisé en ce que** le poids du second film protecteur va de 30 à 5000 mg/m², celui du vanadium dans le second film protecteur va de 2 à 500 mg/m² et celui du zirconium dans le second film protecteur va de 1 à 1750 mg/m².
